# EUROPÄISCHE PATENTSCHRIFT

(11) **EP 0 796 710 B1**
(45) Veröffentlichungstag und Bekanntmachung des Hinweises auf die Patenterteilung: **12.06.2002**
(21) Anmeldenummer: 97104579.4
(22) Anmeldetag: 18.03.1997
(51) Int. Cl.: B29B 17/02, B09B 3/00, B29B 17/00

(54) **Verfahren und Vorrichtung zum Gewinnen eines Ausgangsmaterials für die Herstellung von Wärmeisolationskörpern**
Method and device for obtaining a starting material for producing thermal insulating bodies
Procédé et dispositif pour obtenir un matériau de base pour la fabrication de produits thermiquement isolants

(30) Priorität: 20.03.1996 DE 19610943
(43) Veröffentlichungstag der Anmeldung: 24.09.1997
(73) Patentinhaber: R-plus Recycling GmbH, 75031 Eppingen (DE)
(72) Erfinder: Sautner, Karl-Heinz, 74918 Angelbachtal-Mi. (DE); Hengerer, Rolf, Dr., 70435 Stuttgart (DE)
(74) Vertreter: Dreiss, Fuhlendorf, Steimle & Becker

(56) Entgegenhaltungen:
- EP-A- 0 442 113
- EP-A- 0 538 677
- EP-A- 0 551 655
- EP-A- 0 554 964
- EP-A- 0 589 321
- GB-A- 2 053 944
- JP-A- 7 001 455
- PATENT ABSTRACTS OF JAPAN vol. 006, no. 023 (M-111), 10.Februar 1982 & JP 56 142032 A (INOUE MTP CO LTD;OTHERS: 01), 6.November 1981,

## Beschreibung

Die Erfindung betrifft ein Verfahren zur Gewinnung eines Ausgangsmaterials für die Herstellung von Wärmeisolationskörpern sowie eine Vorrichtung für dieses Ausgangsmaterial, insbesondere unter Verwendung des Verfahrens.

Es ist bekannt, daß Polyurethan- bzw. PUR-Altschaum, der zum Beispiel beim Recyceln von Kühlschränken anfällt, umweltgerecht entsorgt werden muß. Es ist auch bekannt, daß dieser PUR-Altschaum so zermahlen wird, daß die in den Poren bzw. Zellen enthaltenen Gase entweichen können. Diese Gase werden abgesaugt und umweltgerecht recycelt. Der Mahlvorgang, mit dem der PUR-Altschaum zerkleinert wird, zerkleinert diesen derart, daß die Zellen des Altschaumes völlig zerstört werden und eine Weiter- oder Wiederverwertung des Mahlprodukts als Isolationsmaterial (insbesondere in Kühlgeräten) ausgeschlossen ist.

Die EP-A-442 113 zeigt ein Verfahren in dem aufgebrochenes PUR-Altschaum zu Briketts verpresst wird.

Der Erfindung liegt die Aufgabe zugrunde, ein Verfahren und/oder eine Vorrichtung bereitzustellen, um aus PUR-Altschaum ein Ausgangsmaterial für die Herstellung von Wärmeisolationskörpern zu gewinnen.

Diese Aufgabe wird gemäß Anspruch 1 dadurch gelöst, daß die Zellen des PUR-Altschaums geöffnet, werden jedoch in ihrer räumlichen Form bzw. Struktur zum Teil erhalten bleiben, daß das darin enthaltene Gas entfernt wird, daß die aufgebrochenen Zellen ihrer Größe nach klassiert werden und daß die aufgebrochenen Zellen eines Klassenbereichs als Ausgangsmaterial ausgesondert werden.

Als Vorteil bei diesem erfindungsgemäßen Verfahren wird angesehen, daß die Zellen des PUR-Altschaumes nicht vollständig zerstört, sondern lediglich so weit geöffnet werden, daß das darin enthaltene Gas entweichen kann. Die Zellen behalten weitestgehend ihre räumliche Zellstruktur bei und bilden für den später daraus hergestellten Wärmeisolationskörper das Gerüst mit einem großen darin enthaltenen Hohlraum. Durch die Klassierung der Zellen nach ihrer Größe wird das Unterkorn, d.h. werden zu kleine Zellen ausgesondert, da deren Zellstruktur in der Regel zerstört ist. Außerdem wird das Überkorn ausgesondert, da dort in der Regel noch Zellen enthalten sind, die noch nicht aufgebrochen wurden, so daß sie noch mit Gas angefüllt sind. Das Aufbrechen der Zellen ist deshalb besonders wichtig, da die aus dem Ausgangsmaterial hergestellten Wärmeisolationskörper einem Vakuumprozeß unterworfen werden, bei dem die in den Zellen und den Zellzwischenräumen enthaltenen Gase entfernt werden. Es bleiben im Wärmeisolationskörper somit lediglich die aufgebrochenen PUR-Altschaumzellen zurück, die das Stützgerüst bilden. Der die Zellwände umgebende Hohlraum ist evakuiert und gewährleistet somit eine hohe Wärmeisolierung. Nicht aufgebrochene Zellen können nicht evakuiert werden und erhöhen aufgrund des darin enthaltenen Gases den Wärmedurchgangskoeffizienten und zerstören darüberhinaus durch allmähliche Diffusion das angelegte Vakuum.

Gemäß einem bevorzugten Merkmal des erfindungsgemäßen Verfahrens wird das PUR-Altmaterial gemahlen, wobei der Mahlvorgang auf eine Zellengröße von 50 bis 250 µm, insbesondere 100 bis 200 µm, eingestellt wird. Dieser Bereich entspricht in etwa der Zellgröße, so daß weitestgehend sichergestellt ist, daß die Erzeugung von Unter- und Überkorn auf ein Minimum begrenzt ist.

Es hat sich herausgestellt, daß eine Optimierung der Festigkeit bzw. Steifigkeit der Wärmeisolationskörper dadurch erzielt werden kann, wenn Zellen aus einem unteren Klassenbereich mit geringerer Größe, d.h. Unterkorn, dem Ausgangsmaterial zugemischt werden. Auf diese Weise können zu große Hohlräume teilweise aufgefüllt werden, wodurch die Stabilität insbesondere von dünnwandigen Wärmeisolationsplatten zunimmt.

Eine Optimierung des erfindungsgemäßen Verfahrens wird darin gesehen, daß die Zellen der darüber liegenden Klassenbereiche mit größerer Größe, d.h. Überkorn, verworfen oder dem Mahlvorgang zugeschlagen, d.h. erneut gemahlen werden. Auf diese Weise werden Abfallprodukte minimiert, und der Mahlvorgang kann eventuell auf größere Zellengrößen eingestellt werden, so daß der Anteil an Unterkorn verringert wird.

Die eingangs genannte Aufgabe wird außerdem mittels einer Vorrichtung gemäß Anspruch 7 gelöst.

Zum Aufbrechen der Zellen ist bei einem bevorzugten Ausführungsbeispiel eine Mühle für eine Korngröße von 100 bis 200 µm vorgesehen. Bei dieser Einstellung der Mühle werden die Zellen des PUR-Altschaums lediglich aufgebrochen aber nicht vollständig zerstört, und es wird nur ein geringer Anteil an Unterkorn erzeugt, wobei der Anteil an Überkorn ebenfalls gering ist. In einem sich an die Mühle anschließenden Zyklonabscheider wird das in den Zellen enthaltene Gas abgesaugt und umweltverträglich entsorgt. Die nunmehr mit Umgebungsluft angefüllten Zellen werden zur Klassierung einem Sieb zugeführt. Dieses Sieb ist so eingestellt, daß sowohl das Unterkorn als auch das Überkorn ausgesondert wird und lediglich die aufgebrochenen Zellen mit im wesentlichen erhaltener Zellenstruktur in der Sammelvorrichtung aufgefangen werden.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel der Erfindung im einzelnen erläutert ist. Dabei können die in der Zeichnung dargestellten sowie in den Ansprüchen und der Beschreibung erwähnten Merkmale jeweils einzeln für sich oder in beliebiger Kombination erfindungswesentlich sein. In der Zeichnung zeigen:
- Figur 1: einen schematischen Aufbau des PUR-Schaums mit geschlossenen Zellen;
- Figur 2: eine schematische Darstellung von aufgebrochenen Zellen; und
- Figur 3: ein besonders bevorzugtes Beispiel des erfindungsgemäßen Verfahrens bzw. der erfindungsgemäßen Vorrichtung.

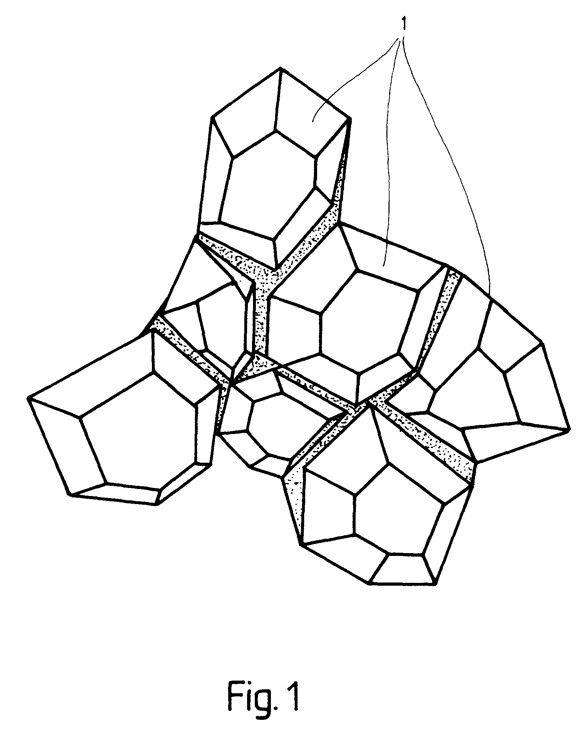

In der Figur 1 ist ein Ausschnitt eines PUR-Altschaums dargestellt, wobei insgesamt sieben wabenartig geformte Zellen 1 ersichtlich sind. Diese Zellen 1 sind geschlossen und mit Gas angefüllt.

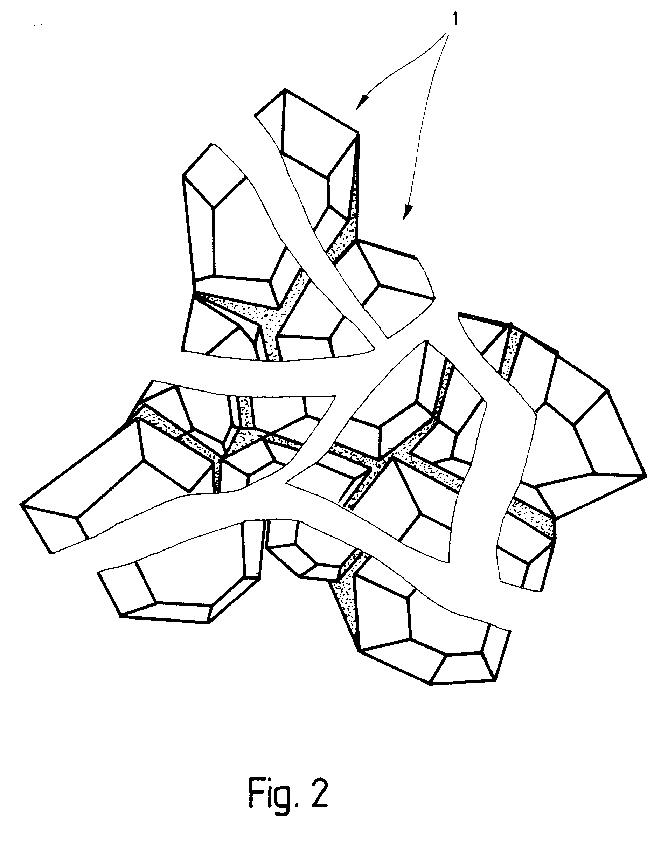

In der Figur 2 sind die Zellen 1 aufgebrochen, so daß das darin enthaltene Gas entweichen kann. Die Zellstruktur, d.h. die Wabenstruktur ist dabei im wesentlichen erhalten geblieben.

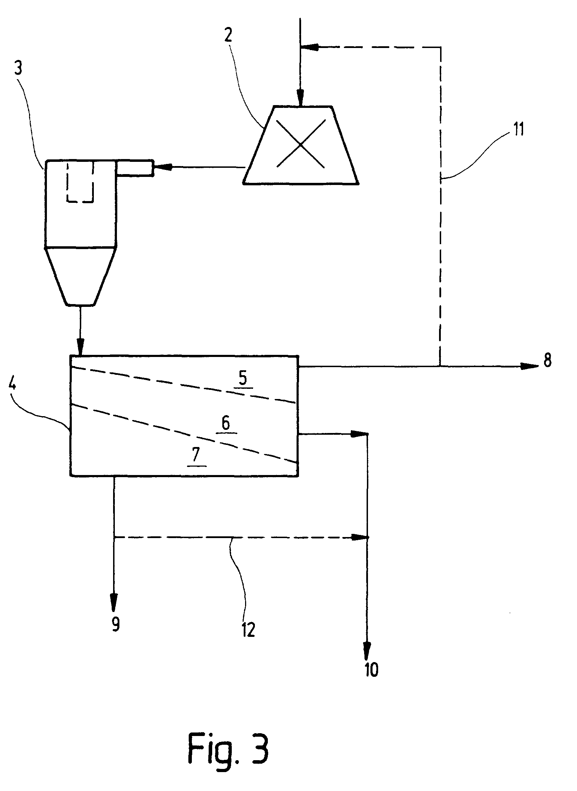

In der Figur 3 ist der Verfahrensablauf zur Aufbereitung des PUR-Altschaums dargestellt, wobei dieser PUR-Altschaum in eine Mühle 2 eingefüllt wird, in der der Altschaum auf eine Teilchengröße von 100 bis 200 µm zermahlen wird. Bei diesem Mahlvorgang werden, wie in der Figur 2 dargestellt, die Zellen aufgebrochen. Das Mahlgut wird einem Abscheider 3 zugeführt, wo die aufgebrochenen Zellen 1 und die darin enthaltenen Gase getrennt werden. Die entgasten Zellen 1 werden daraufhin einem Sieb 4 zugeführt, in welchem die aufgebrochenen Zellen 1 der Größe nach klassifiziert werden.

Beim Ausführungsbeispiel der Figur 3 werden die Zellen 1 in drei Klassenbereiche 5, 6 und 7 aufgeteilt, wobei im Klassenbereich 5 das Überkorn 8 und im Klassenbereich 7 das Unterkorn 9 anfallen. Das im Klassenbereich 6 anfallende Material wird angesammelt und stellt das Ausgangsmaterial 10 für Wärmeisolationskörper, insbesondere Wärmeisolationsplatten dar.

Das Überkorn 8 kann entweder verworfen oder gemäß Pfeil 11 zur Mühle 2 zurückgeführt werden, so daß es erneut gemahlen wird. Das Unterkorn 9 kann ebenfalls verworfen oder teilweise gemäß Pfeil 12 dem Ausgangsmaterial 10 zugeschlagen werden.

Mit diesem erfindungsgemäßen Verfahren bzw. dieser erfindungsgemäßen Vorrichtung wird ein Ausgangsmaterial 10 gewonnen, welches zum einen eine stabile zellenartige Struktur mit einem großen Hohlraumvolumen aufweist, wobei dieser Hohlraum frei von Fremdgasen und außerdem offen ist. Auf diese Weise kann der Hohlraum problemlos evakuiert werden, so daß aus diesem Ausgangsmaterial 10 hergestellte Wärmeisolationskörper einen sehr niedrigen Wärmedurchgangskoeffizienten aufweisen.

## Patentansprüche

1. Verfahren zur Herstellung von Wärmeisolationskörpern, wobei das Verfahren folgende Verfahrensschritte aufweist:
- die Zellen (1) von PUR-Altschaum werden geöffnet, bleiben jedoch in ihrer räumlichen Struktur zum Teil erhalten;
- das darin enthaltene Gas wird entfernt;
- die aufgebrochenen Zellen (1) werden ihrer Größe nach klassiert;
- die Zellen (1) eines Klassenbereichs (6) werden als Ausgangsmaterial (10) für die Herstellung des Wärmeisolationskörpers ausgesondert;
- aus dem Ausgangsmaterial (10) wird der Isolationskörper hergestellt;
- der Isolationskörper wird einem Vakuumprozeß unterworfen, bei dem die in den Zellen (1) und den Zellzwischenräumen enthaltenen Gase entfernt werden.

2. Verfahren nach Anspruch 1, **dadurch gekennzeichnet, daß** das PUR-Altmaterial gemahlen wird.

3. Verfahren nach Anspruch 2, **dadurch gekennzeichnet, daß** der Mahlvorgang auf eine Zellengröße von 50 bis 250 µm, insbesondere 100 bis 200 µm, eingestellt wird.

4. Verfahren nach einem vorhergehenden Ansprüche, **dadurch gekennzeichnet, daß** Zellen (1) aus einem unteren Klassenbereich (7) mit geringerer Größe dem Ausgangsmaterial (10) zugemischt werden.

5. Verfahren nach einem der vorhergehenden Ansprüche, **dadurch gekennzeichnet, daß** die Zellen (1) der darüberliegenden Klassenbereiche (5) mit größerer Größe verworfen oder dem Mahlvorgang zugeschlagen werden.

6. Verfahren nach einem der vorhergehenden Ansprüche, **dadurch gekennzeichnet, daß** das PUR-Altmaterial Altkühlschränken entnommen wird.

7. Vorrichtung zur Herstellung von Wärmeisolationskörpern, insbesondere nach einem Verfahren gemäß einem der vorhergehenden Ansprüche, mit einer Vorrichtung zum Öffnen der Zellen (1) von PUR-Altschaum, einem Abscheider (3) zum Entgasen der geöffneten Zellen (1), einer Klassierungseinrichtung zum Trennen der Zellen (1) in wenigstens drei Klassenbereiche (5 bis 7), einer Sammelvorrichtung für die Zellen (1) des mittleren Klassenbereichs (6) und einer Vorrichtung zum Herstellen des Wärmeisolationskörpers aus den Zellen des mittleren Klassenbereichs und einer Vorrichtung zum Evakuieren der Zellen und der Zellzwischenräume des hesgestellten Wärmeisolationskörpers.

8. Vorrichtung nach Anspruch 7, **dadurch gekennzeichnet, daß** zum Aufbrechen der Zellen (1) eine Mühle (2) für eine Korngröße von 100 bis 200 µm vorgesehen ist.

9. Vorrichtung nach Anspruch 7 oder 8, **dadurch gekennzeichnet, daß** der Abscheider (3) ein Zyklonabscheider ist.

10. Vorrichtung nach einem der Ansprüche 7 bis 9, **dadurch gekennzeichnet, daß** für die Klassierung der Zellen (1) ein Sieb (4) vorgesehen ist.

11. Vorrichtung nach einem der Ansprüche 7 bis 10, **dadurch gekennzeichnet, daß** eine Rückführeinrichtung (11) von der Klassierungseinrichtung zur Vorrichtung zum Öffnen der Zellen (1) für die Zellen (8) der oberen Klassenbereiche (5) vorgesehen ist.

12. Vorrichtung nach einem der Ansprüche 7 bis 11, **dadurch gekennzeichnet, daß** eine Zumischeinrichtung (12) zum Zumischen von Zellen (9) der unteren Klassenbereiche (7) zum Ausgangsmaterial (10) vorgesehen ist.

## Claims

1. Method for producing thermal insulating bodies, wherein the method comprises the following method steps:
- the cells (1) of scrap polyurethane foam are opened but are partly retained in their three-dimensional structure;
- the gas contained therein is removed;
- the cells (1) which have been broken open are classified according to their size;
- the cells (1) in a class range (6) are separated as starting material (10) for the production of the thermal insulating body;
- the insulating body is produced from the starting material (10);
- the insulating body is subjected to a vacuum process in which the gases contained in the cells (1) and in the cell interstices are removed.

2. Method according to claim 1, **characterised in that** the scrap polyurethane material is ground.

3. Method according to claim 2, **characterised in that** the grinding process is adjusted to a cell size of 50 to 250 µm, in particular 100 to 200 µm.

4. Method according to any one of the preceding claims, **characterised in that** cells (1) from a lower class range (7) with a smaller size are mixed into the starting material (10).

5. Method according to any one of the preceding claims, **characterised in that** the cells (1) of the superior class range (5) thereabove with larger size are rejected or added to the grinding process.

6. Method according to any one of the preceding claims, **characterised in that** the scrap polyurethane material is removed from scrap refrigerators.

7. Device for producing thermal insulating bodies, in particular by a method according to any one of the preceding claims, with a device for opening the cells (1) of scrap polyurethane foam, a separator (3) for degassing the opened cells (1), a classification apparatus for separating the cells (1) into at least three class ranges (5 to 7), a collecting device for the cells (1) of the middle class range (6) and a device for producing the thermal insulating body from the cells of the middle class range and a device for evacuating the cells and the cell interstices of the thermal insulating body produced.

8. Device according to claim 7, **characterised in that** a mill (2) for a grain size of 100 to 200 µm is provided for breaking open the cells (1).

9. Device according to claim 7 or 8, **characterised in that** the separator (3) is a cyclone separator.

10. Device according to any one of claims 7 to 9, **characterised in that** a screen (4) is provided for classifying the cells (1).

11. Device according to any one of claims 7 to 10, **characterised in that** a return apparatus (11) from the classification apparatus to the device for opening the cells (1) is provided for the cells (8) of the upper class range (5).

12. Device according to any one of claims 7 to 11, **characterised in that** a mixing apparatus (12) is provided for mixing cells (9) from the lower class range (7) into the starting material (10).

## Revendications

1. Procédé de fabrication de produits thermiquement isolants, ledit procédé comportant les étapes suivantes :
- les alvéoles (1) de mousse de polyuréthane usagée sont ouvertes mais conservent en partie leur structure tridimensionnelle ;
- le gaz contenu dans lesdites alvéoles est évacué ;
- les alvéoles (1) ouvertes sont triées selon leur taille ;
- les alvéoles (1) d'une zone de calibrage (6) sont prélevées comme matériau de base (10) pour la fabrication de produits thermiquement isolants ;
- le produit isolant est fabriqué à partir du matériau de base (10).
- le produit isolant est soumis au vide afin d'évacuer les gaz contenus dans les alvéoles (1) et les interstices entre les alvéoles.

2. Procédé selon la revendication 1, **caractérisé en ce que** le polyuréthane usagé est broyé.

3. Procédé selon la revendication 2, **caractérisé en ce que** le processus de broyage est réglé sur une taille d'alvéole de 50 à 250 µm, en particulier de 100 à 200 µm.

4. Procédé selon l'une des revendications précédentes, **caractérisé en ce que** des alvéoles (1) de taille inférieure provenant d'une zone de calibrage inférieure (7) sont mélangées au matériau de base (10).

5. Procédé selon l'une des revendications précédentes, **caractérisé en ce que** les alvéoles (1) de taille supérieure provenant des zones de calibrage supérieures (5) sont exclues ou réinjectées dans le processus de broyage.

6. Procédé selon l'une des revendications précédentes, **caractérisé en ce que** le polyuréthane usagé provient de réfrigérateurs usagés.

7. Dispositif pour fabriquer des produits thermiquement isolants, en particulier conformément à un procédé selon l'une des revendications précédentes, présentant un dispositif d'ouverture des alvéoles (1) de mousse de polyuréthane usagée, un séparateur (3) pour évacuer le gaz des alvéoles (1) ouvertes, un dispositif de calibrage pour répartir les alvéoles (1) dans trois zones de calibrage (5 à 7) au moins, un dispositif pour collecter les alvéoles (1) de la zone de calibrage intermédiaire (6), un dispositif pour fabriquer le produit thermiquement isolant à partir des alvéoles de la zone de calibrage intermédiaire et un dispositif pour faire le vide dans les alvéoles et les interstices entre les alvéoles du produit thermiquement isolant fabriqué.

8. Dispositif selon la revendication 7, **caractérisé en ce qu'**il est prévu, pour casser les alvéoles (1), un broyeur (2) permettant d'obtenir une granulométrie de 100 à 200 µm.

9. Dispositif selon la revendication 7 ou 8, **caractérisé en ce que** le séparateur (3) est un séparateur à cyclone.

10. Dispositif selon l'une des revendications 7 à 9, **caractérisé en ce qu'**il est prévu un tamis (4) pour le calibrage des alvéoles (1).

11. Dispositif selon l'une des revendications 7 à 10, **caractérisé en ce qu'**il est prévu un dispositif de renvoi (11) des alvéoles (8) de la zone de calibrage supérieure (5) à partir du dispositif de calibrage vers le dispositif d'ouverture des alvéoles (1).

12. Dispositif selon l'une des revendications 7 à 11, **caractérisé en ce qu'**il est prévu un dispositif de mélangeage (12) pour mélanger des alvéoles (9) de la zone de calibrage inférieure (7) au matériau de base (10).
